# EUROPEAN PATENT APPLICATION

(11) **EP 0 967 559 A1**
(43) Date of publication of application: **29.12.1999**
(21) Application number: 99304670.5
(22) Date of filing: 15.06.1999
(51) Int. Cl.: G06F 17/30

(54) **Push-pull services for the internet**

(30) Priority: 24.06.1998 US 103976
(71) Applicant: LUCENT TECHNOLOGIES INC., Murray Hill, New Jersey 07974-0636 (US)
(72) Inventor: Chueng-Hsien, Lin, Piscataway, New Jersey 08854 (US); Sanjoy, Paul, Marlboro, New Jersey 07746 (US); Krishan, Kumar Sabnani, Westfield, New Jersey 07090 (US)
(74) Representative: Watts, Christopher Malcolm Kelway, Dr.

(57) **Abstract**

In an arrangement that employs a push-pull paradigm, information that is to be communicated to clients is broadcast, or multicast, to cache servers, wherein the information is cached in preparation for its being pulled by clients. By pushing information to points close to the clients, both source overload and network overload are avoided. The pushed information in the disclosed approach is transmitted over Internet links, or over other communication channels, such as cable and radio systems. In operation, clients subscribe to specific services of the provider, an association is established between the subscribing client and a cache server, and the server informs the network that it should be included among the destinations to which information from the provider is transmitted. when information is subsequently transmitted by the provider and received by the cache servers, it is stored in the cache server in preparation for its being pulled by the clients, as desired and when desired.

## Description

### Background of the Invention

This invention relates to Internet services and, more particularly, to "push" type communication services through the Internet where transmission of information is initiated by a source.

A recent survey has shown that 18% of Internet traffic is due to push services provided by companies like PointCast, where information is collected from diverse sites on the Internet and is made available to clients in distinct, categorized, channels. Clients pre-subscribe to those channels and, to a client connected to such a site, the information appears to be available to the client's browser by simply selecting the categories, or "channels", without any browsing the Internet. Hence, the term "push" is used, as contrasted to the term "pull", where the client pulls information from various different source sites after browsing the Internet and selecting the sources one by one. To the client, this arrangement appears much like cable TV, where premium channels are subscribed to and, once subscribed to, are always available to the client.

Although the familiar cable TV channel subscriptions paradigm corresponds to a multicast arrangement, the present day push service providers do not actually multi-cast any information. Rather, they browse the Internet, cache all of the information that they will offer in the various channels (and perhaps create some), and wait for clients to connect to their respective servers. Those clients that do not encounter server overload from too many connected clients, and thus succeed in connecting to the server, are sent information, as requested, in the normal TCP/IP manner. In reality, then, the offered service of present day push service providers is really a "pull" service from a single source (that is, under control of the push service provider), as contrasted to a "pull" service from individual browsed sources.

One problem with the push service approach is that it does not scale very well. Aside from the server overload problem mentioned above, there is also a potential network overload problem. when many clients want to receive information, they all have to gain access to the site, open up separate TCP/IP connections to the server and retrieve information packets. When those packets relate to the same information that is requested by many clients, duplicate packets are pulled through the network. This results in unnecessary traffic through the network.

Internet does provide for multi-casting capabilities through Class D Group addressing, whereby users dynamically join or leave a group by means of the IGMP protocol. A multicast tree is set up, and intermediate routers replicate the transmitted information along the branches of the tree. This relieves the transmission burden on the site that provides the information, because the information gets replicated in the network. However, the resulting overall traffic on the network is not much lower, and an overhead must be suffered in the processes that dynamically set up multicast trees, join existing trees, leave existing trees, and dismantle existing trees. Moreover, the pushed information must be received when it is sent.

In a separate art, push technology is used extensively in satellite, cable, and conventional radio applications, where information is broadcast to all clients who are passive listeners. Adopting a true push approach would clearly overcome the server overload problem and the routing overhead problem. However, it would introduce other problems. For example, requiring the browsers of client computers to accept information whenever some transmitting point chooses to push information would require major modifications to the browsers that are currently available. Also, requiring client computers to accept and store large amounts of data that the user may, ultimately, choose not to look at places an undue burden on the client computers. Further, some corporate environments use "firewalls" which strictly control what is allowed to come into the corporate network, and no multicast or broadcast traffic is allowed.

### Summary of the Invention

Problems associated with the pull paradigm and with the push paradigm are overcome by employing a caching server architecture with a push-pull paradigm. Information that is to be communicated to clients is broadcast, or multicast, and pushed to cache servers, wherein the information is cached in preparation for it being pulled by clients, when desired. By pushing information to points close to the clients, both source overload and network overload are avoided. The pushed information in the disclosed approach is transmitted over the Internet, or over other communication channels, such as cable and radio systems. Actually, cable and radio are channels that are naturally suited to broadcasting and, therefore, are particularly advantageous. The process of a provider pushing information to the cache servers is controlled, in part, by clients who choose to subscribe to specific services of the provider. As part of the subscription process, an association is established between the subscribing client and a cache server, and the cache server informs the network that it should be included among the destinations to which information from the provider is transmitted. When information is subsequently transmitted by the provider and received by the cache server, it is stored in the cache server in preparation for its being pulled by the clients, as desired and when desired.

In applications where firewalls are set between a corporate network and the rest of the Internet, a relay agent is installed at the firewall gateway to serve as the cache server. In applications where client PCs connect at will to the Internet through an Internet service provider (ISP), the provider specifies the association between the clients and particular cache servers. Typically, the cache server that is associated with a client is closer to the client (from the standpoint of number of Internet nodes that need to be traversed) than the servers that provide the information.

### Brief Description of the Drawings

FIG. 1 presents an arrangement for implementing the push-pull service of this invention; and
FIG. 2 presents the FIG. 1 arrangement with wireless and cable means for broadcasting information to the cache servers.

### Detailed Description

In the context of this disclosure, a push service provider is a provider that offers information to subscriber clients in a manner such that to a client the information appears to be readily present in the client's computer. This includes the type of providers described above in the "Background of the Invention" section.

From the client's perspective with respect to minimizing latency, the ideal situation is for the push service provider to *a priori* install on the client's computer all of the information that the client might wish to view. In this way, the information is as readily available as is possible. That would be a true push service. For the reasons discussed above, however, this is not a viable approach. Therefore, in accordance with the approach disclosed herein, instead of pushing information to a client's computer, the provider pushes information to a nearby cache server that is associated with the client's computer. Typically, such a cache server is located in the vicinity of the client which, in the context of this disclosure, means a location to which the client can connect with the least burden on the Internet network. A "vicinity" would correspond to a small number of Internet nodes between the client and the cache server. Some practitioners might also account for the bandwidth that may be available. Thus, a cache server that is two nodes away with very high bandwidth links might be selected over a cache server that is one node away but which has a relatively narrow band link.

Although the approach disclosed herein is more of a "push" service than the one currently available, it is still not a truly "push" service. For sake of accuracy, the following refers to the disclosed service as "push-pull" service. The provider of such a service is, nevertheless, referred to as a "push service provider", as stated above, because that is the impression that such providers wish to leave with their clients.

In accordance with the disclosed approach, the push service provider multicasts or broadcasts to cache servers all of the files that the cache servers need in order to fulfill the subscription obligations of the associated clients. When clients desire information, they pull it from the cache servers - instead of from the host that belongs to the push service provider - using conventional browsers. The files pushed to the cache servers might be static image files, video clip files, voice segment files, etc. In connection with files created by the push service provider, every time an updated file is generated, it is transmitted to the cache servers where it replaces the old file. When a push service provider discards a file, a message is sent to the cache servers to discard the corresponding file. In connection with files created by others and adopted, so to speak, by the push service provider, the latter checks the source of the files at some selected regularity and updates the cache servers appropriately.

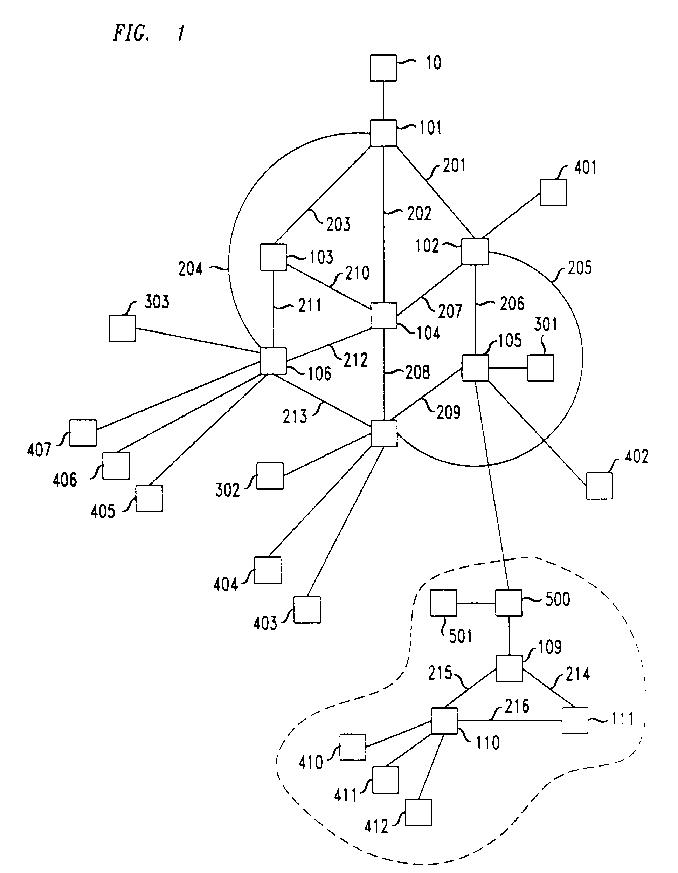

FIG. 1 presents a drawing of the salient elements of the Internet which will assist in understanding the various aspects of this invention. Host 10 is a computer that provides a push service. It is connected to the Internet via router 101. Router 101, routers 102-107, and interconnecting links 201-213 form the Internet. Cache servers 301, 302, and 303 are connected to routers 105, 107, and 106, respectively, and clients are connected to some of the routers. Specifically, client 401 is connected to router 102, client 402 is connected to router 105, clients 403 and 404 are connected to router 107, and client 405-407 are connected to router 106.

FIG. 1 also shows a corporate network that comprises router 109, 110, and 111 that are interconnected via links 214, 215, and 216, and clients 410, 411, and 412 coupled to router 110. The corporate network is connected to the Internet through a gateway "firewall" computer 500. Computer 500 includes a coupled cache server 501 that, effectively, is situated outside the "firewall" (i.e., on the Internet side and not on the corporate network side).

For the push service of this disclosure, the operation of the FIG. 1 network can be divided into a set-up phase, and a steady-state phase. During the set-up phase, the network is conditioned to bring information that is transmitted by host 10 to the various cache servers that seek to store the information. Illustratively in FIG. 1, the cache servers that need to receive information are cache servers 301, 302, 303, and 501. During the steady-state phase, information that is transmitted by host 10 is stored in cache servers 301, 302, 303, and 501, and that information is pulled by any of the subscriber clients, at will, from their designated cache servers. The pulling of information by corporate network clients, such as client 410, is accomplished in accordance with whatever protocol the guardians of the corporate network specify.

### Set-Up

The set-up phase can also be broken into two portions. The first is assigning cache servers to serve specific clients (not necessarily a static assignment), and the second is conditioning the network to insure that appropriate cache servers receive the needed information. Illustratively, FIG. 1 shows a portion of the Internet network where an Internet Service Provider (ISP), e.g., AT&T, or America on Line, owns routers 102, 105, 106 and 107, and where the shown clients (other than the corporate network clients) are served by that ISP. That is, these clients have an agreement with the ISP whereby the clients are provided access to the Internet in exchange for a monthly fee. Illustratively, the ISP has chosen to connect a cache server to three of the four routers (excluding router 102), and through these cache servers the ISP provides its clients with the enhanced push-pull service disclosed herein (as well as other caching services). Presumably, the ISP has made arrangements with either its clients or with the provider that owns host 10 for some extra compensation for use of its cache servers.

When a client, for example client 401, wishes to subscribe to a push-pull service offered by the provider that owns host 10, the client informs its ISP of this desire and causes the ISP to assign the client to a cache server. This is done, for example, by installing one or more entries in the DNS (Domain Name System) that is assigned to the client, which resolve, for this client, the Internet address of host 10 to that of different cache servers in the vicinity of the client. That address might even be the address of a cache server that is co-located with the node of the ISP to which the client dials in. In such a case, the cache server is at the ultimate periphery of the Internet network vis-a-vis the client. In the illustrative example of FIG. 1, the ISP might select cache server 301 as the cache server for client 401. It should be noted that such an assignment need not be permanent, or static. For various reasons, such as load balancing, the association of a client to a cache server can be changed (e.g., by simply modifying the appropriate entry in the client's DNS). Obviously, given a choice of two equally loaded cache servers, the server that is advantageously selected is the one that least loads the Internet network.

Having assigned the client to a cache server, the next step is to condition the Internet so that the appropriate cache servers, such as server 301, would receive the host 10 information that their clients subscribe to. Such conditioning may be effected by a standard IP multicasting protocol, such as the Internet Group Management Protocol (IGMP). In accordance with this protocol, host 10 sends a special packet that floods the Internet and specifies a group ID. Each router receives this packet from some of the links that are connected to the router, and forwards this packet to all of the links that are connected to the router from which this packet did not arrive. With respect to that particular host, the former links are the incoming links of the router, and the latter links are the outgoing links of the router. After the flooding message is sent, all routers respond. A router that a) has no cache server that wants transmissions to the special packet's group, and that b) has all of its outgoing links provide a pruning message response, outputs a pruning message to all of its incoming links. A router that does not meet both criteria outputs a pruning message to all but one of its incoming links. Links that pass a pruning message are pruned from the tree. This results in a tree that defines the branches (links) through which packets transmitted by host 10 flow, where each cache server, as a receiver, or a leaf of the tree, has a path to host 10 through one or more routers. Creation of the routing tree can occur at a regular rate, such as every 30 seconds.

The IGMP protocol also permits a dynamic joining or leaving of the tree. A new cache server is added by sending a grafting message to host 10, with the path taken by the grafting message being established as part of the tree. Leaving a tree is done in a similar way.

The above-described approach to multicasting is merely illustrative, of course, and other protocols can be used.

### Steady-State

The steady-state operation is, in a sense, straightforward. Host 10 multicasts information at whatever rate it desires and, once the transmission tree is set up, the transmitted packets arrive at the cache servers, wherein they are stored. Thereafter, the stored packets may be pulled by the clients, as desired and when desired.

Most file transmission protocols on the Internet are of the "best effort" variety. For the arrangement disclosed herein, it would be advantageous to employ a protocol that provides a greater assurance of successful file transmissions. This may be accomplished, for example, with an "application-layer" protocol (herein called EUReCa) which guarantees delivery of objects (such as files). This protocol insures that objects sent by a source machine (a sender) to any number of destination machines (receivers) actually arrive at the intended receivers even when the receivers are temporarily unavailable, for example due to failure or due to network partition. EUReCa can be either sender-driven (EUReCa-S) or receiver-driven (EUReCa-R).

In EUReCa-S, the sender explicitly keeps track of the status of every receiver through an Active Receiver List (ARL). That is, the sender knows the identity of the receivers (cache servers) that are supposed to receive a transmitted object, and waits for each receiver to acknowledge every received object before proceeding with transmission of a next object. As an aside, a receiver can send an acknowledgment for every object it receives, can send a cumulative acknowledgment for a set of objects, or can even send an acknowledgment for a "portion" of an object. The last type of acknowledgment is useful when the object is a very large file (say, video movie of several Gigabytes). When the sender does not receive an acknowledgement from a receiver within a pre-determined time, it flags the receiver's entry in the ARL as unavailable, and keeps track of objects that should have been received, but were not. This may be done, for example, by noting the time when the receiver became unavailable.

Recovery is effected, illustratively, by polling the unavailable receivers at regular intervals. Once a receiver becomes active and affirmatively responds to the polling signal, the sender, such as host 10, retransmits all the files that have been missed by the now-available receiver. The receivers that have not been unavailable receive a second copy of the objects, but that is not detrimental. To minimize the down time of a receiver that has been made unavailable and then was made available, the EUReCa protocol permits such a receiver to send a message that informs host 10 that it is now available to receive objects.

In EUReCa-R, the sender does not explicitly keep track of the receivers' status. Rather, it transmits objects with a time stamp and a sequence number, and leaves the responsibility of reliable delivery to the receiver. It also sends a "heartbeat" message on a periodic basis. A receiver detects that something is wrong when it misses more than a predetermined number of the "heartbeat" messages, when it detects a missing object because the sequence is off; when it does not receive an object completely, or when it becomes available after being unavailable for some time. When the receiver misses an object, it requests a retransmission of the missed object based on the missing object's sequence number. When the receiver has been unavailable for a while and then becomes available, it provides the sender with the last timestamp and the size of a file it received from the sender (in case it only partially received an object). Based on this timestamp, the sender retransmits the object(s) and/or portions of an object that need(s) to be retransmitted.

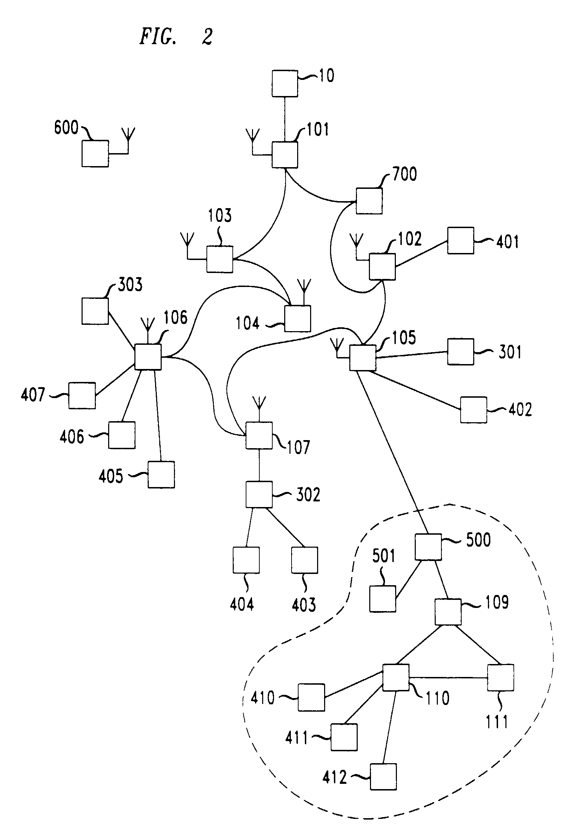

The above disclosure addresses a push-pull service architecture that is based on the existing Internet infrastructure. We realized, however, that other mechanisms, which are well known but not used in the Internet, offer a more efficient approach for distributing push-service information. In particular, we realized that wireless technology, such as satellite communication, cellular communication, etc., as well as cable technology are both suited extremely well for distribution of push-pull service information. FIG. 2, therefore, shows the FIG. 1 network (with links 201-213 not shown for sake of clarity) that further comprises a wireless transceiver unit 600, and corresponding units within each of the routers that terminate with an antenna.

Unit 600 may be a satellite that broadcasts to all of the routers, while the units in each of the routers have a receiver and a transmitter to up-link to the satellite. Of course, the depiction of FIG. 2 is merely illustrative, and other means may also be employed. For example, broadcast can be effected with a network of cellular stations instead of a satellite. Also, the broadcast can be directly to the cache servers, rather than to the routers. In operation, host 10 transmits its information to unit 600 via an uplink channel, and unit 600 broadcasts that information to all of the routers, or to all of the cache servers, as the case may be.

FIG. 2 also includes a cable system, which may alternatively be used. The cable system shown is a "daisy chain" system, which begins at head station 700, visits each of the routers, and returns to the head station. Broadcasting from host 10 is effected by host 10 sending information on an "uplink" channel of the cable to head station 700, and head station 700 broadcasting the information on a downlink channel, sending the broadcast signal around the loop. Cable 710 can be a coax cable that sends electrical signals or it can be a fiber-optical cable.

The above presents the principles of this invention and it should be appreciated that various modifications are possible that are encompassed by the disclosed principles. For example, the above discloses the notion that transmission through the Internet network links is carried out using a multi-cast protocol. Actually, it could encompass various hybrid arrangements. For instance, an ISP provider that owns a number of cache servers may designate one of its cache servers as the interface to various push service providers (such as host 10), and assume responsibility of spreading, or dispersing, the received information among its cache servers. Such spreading could be by simply multicasting throughout a fixed tree that connects its cache servers, but other approaches are also possible.

## Claims

1. In a network comprising routers and links that interconnect said routers, as well as hosts, cache servers and client computers that are coupled to said routers, a method for providing information to a plurality of client computers that subscribe to a push service of one of said hosts serving as a push service provider, comprising the steps of:
said push service provider communicating information to selected ones of said cache servers that are assigned to service said plurality of client computers;
said selected ones of said cache servers storing said information; and
when one of said plurality of client computers requests some of said information, a cache server to which said one of said plurality of client computers is assigned providing the requested information.

2. The method of claim 1 where said client computers are assigned to cache servers that are most directly connectable to said client computers.

3. The method of claim 1 where assignment of client computers to cache servers is changeable.

4. The method of claim 1 where said client computers are dynamically assigned to cache servers based on loads of said cache servers.

5. The method of claim 1 further comprising a step of assigning said client computers to said cache servers.

6. The method of any of the preceding claims where said step of push service provider communicating information is carried out via said links, employing a multicasting protocol.

7. The method of claim 6 where said step of push service provider communicating information is carried out following a step of establishing a multicasting transmission tree.

8. The method of any of claims 1 to 5 where said step of push service provider communicating information is carried out via any combination of transmission elements taken from a set comprising said links, wireless connection between said push service provider and said cache servers, and a cable connection that couples the push service provider to a cable head station, and couples the cable head station to said cache servers.

9. The method of claim 16 where said step of push service provider communicating information is carried out via a broadcast medium that couples said push service provider to said selected ones of said cache servers, for example coaxial or optical cable that connects to said cache servers.

10. The method of any of the preceding claims where said step of push service provider communicating information is carried via an application level protocol that provides object-level guaranteed delivery.

11. The method of any of claims 1 to 9 where said step of push service provider communicating information is carried out with a protocol for retransmission of objects that have not been successfully communicated to a server.

12. A method comprising the steps of:
specifying for a client computer a cache server,
establishing a request for a push service provider to transmit information to said cache server whenever said push service provider chooses to update content of information that it offers,
accepting and storing information transmitted by said push service provider. and
delivering said information from said cache server to said client computer, upon request for said information from said client computer.
